# EUROPÄISCHE PATENTSCHRIFT

(11) **EP 2 321 557 B1**
(45) Veröffentlichungstag und Bekanntmachung des Hinweises auf die Patenterteilung: **19.09.2012**
(21) Anmeldenummer: 09781398.4
(22) Anmeldetag: 03.08.2009
(51) Int. Cl.: F16H 57/02

(54) **SCHALTGETRIEBE MIT EINEM EINE NEBENKAMMER AUFWEISENDEN GETRIEBEGEHÄUSE**
CHANGE-SPEED GEARBOX HAVING A GEARBOX HOUSING WHICH HAS AN AUXILIARY CHAMBER
BOÎTE DE VITESSES AVEC UN CARTER DE TRANSMISSION POSSÉDANT UNE CHAMBRE AUXILIAIRE

(30) Priorität: 09.09.2008 DE 102008041886
(43) Veröffentlichungstag der Anmeldung: 18.05.2011
(73) Patentinhaber: ZF Friedrichshafen AG, 88038 Friedrichshafen (DE)
(72) Erfinder: LANZ, Hermann, 88699 Frickingen (DE)
(86) Internationale Anmeldenummer: PCT/EP2009/060003
(87) Internationale Veröffentlichungsnummer: WO 2010/028916

(56) Entgegenhaltungen:
- DE-A1- 10 316 321
- DE-A1- 10 326 866
- DE-A1-102006 046 176

## Beschreibung

Die Erfindung betrifft ein Schaltgetriebe eines Kraftfahrzeuges mit einer Antriebs- und einer Abtriebswelle, die in einer Hauptkammer eines Getriebegehäuses gelagert sind und über welche durch miteinander kämmende Zahnradpaare ein Leistungsfluss durch gezielte Betätigung von Kupplungen mittels einer Schalteinrichtung führbar ist, wobei parallel zur Antriebs- und zur Abtriebswelle eine Zwischenwelle mit einem Zwischenrad in einer mit der Hauptkammer in Verbindung stehenden Nebenkammer des Getriebegehäuses angeordnet ist, um bei einer entsprechenden Betätigung durch die Schalteinrichtung einen Leistungsfluss von der Antriebswelle über das Zwischenrad der Zwischenwelle auf die Abtriebswelle zur Drehrichtungsumkehr der Abtriebswelle darzustellen.

In Schaltgetrieben für Kraftfahrzeuge wird üblicherweise die zur Rückwärtsfahrt des Fahrzeuges nötige Drehrichtungsumkehr der Abtriebswelle über ein Zwischenrad realisiert, welches auf einer Zwischenwelle im Getriebegehäuse angeordnet ist. Dieses Zwischenrad ist hierbei besonderen Belastungen ausgesetzt, da es gleichzeitig mit zwei zugeordneten Zahnrädern in Eingriff steht, zum einen mit einem zugeordneten Zahnrad der Antriebswelle bzw. der Vorgelegewelle und zum anderen mit einem Zahnrad der Abtriebswelle.

Diese höhere Belastung des Zwischenrades bewirkt eine höhere Beanspruchung der Zwischenwelle sowie der Lagerungen der Zwischenwelle und letztendlich auch des Getriebegehäuses im Bereich der Lagerstellen. Um einer hohen Durchbiegung der Zwischenwelle entgegenzuwirken, was ansonsten zu Flankenlinienabweichungen in den Zahneingriffen des Zwischenrades führen würde, und um die hohen Belastungen ertragen zu können, muss das Getriebegehäuse im Bereich der Zwischenwelle eine hohe Festigkeit aufweisen.

Ein Schaltgetriebe mit einem derartigen Getriebegehäuse ist aus de gattungsgemäßen DE 103 16 321 A1 bekannt, bei welchem in einer Hauptkammer und parallel zu Achsen der Antriebs- und der Abtriebswelle eine Zwischenwelle mit einem Zwischenrad zur Darstellung einer Drehrichtungsumkehr der Abtriebswelle platziert ist. Diese Zwischenwelle wird dabei an der einen Seite in einer Ausnehmung des Getriebegehäuses platziert und an der anderen Seite über eine Halbschale und eine Verschraubung am Getriebegehäuse gesichert. Insgesamt ist die Zwischenwelle mit Zwischenrad in einer Ausbuchtung des Getriebegehäuses angeordnet.

Nachteilhaft an einer derartigen Anordnung ist, dass diese Art der Befestigung der Zwischenwelle im Getriebegehäuse im Gegensatz zur Lagerung der Welle in massiven Wänden des Getriebegehäuses eine niedrigere Festigkeit aufweist. Des Weiteren ist für die Gestaltung der Ausbuchtung der Hauptkammer zur Platzierung der Zwischenwelle ein entsprechender Materialmehraufwand nötig, was letztendlich auch den Herstellungsaufwand erhöht.

Aus der DE 198 11 874 C2 ist des Weiteren ein Schaltgetriebe mit einem Getriebegehäuse bekannt, bei welchem die Zwischenwelle mit Zwischenrad in einer seitlich zur Hauptkammer platzierten, rechteckförmigen Nebenkammer angeordnet ist. Zwischen Hauptkammer und Nebenkammer ist dabei ein Durchbruch vorhanden, über welchen das Zwischenrad mit den beiden zugehörigen Zahnrädern von Antriebs- und Abtriebswelle in Kontakt steht. Um das Zwischenrad in der Nebenkammer positionieren und montieren zu können, weist die Nebenkammer eine rechteckförmige Öffnung auf, welche mit einem Deckel über Schraubverbindungen nach der Montage verschlossen wird.

In einer derartigen Anordnung, führt der Rechteckquerschnitt der Nebenkammer zu Kerbspannungen in diesem Gehäusebereich, wobei dieser Effekt durch die Gewindebohrungen des Deckels noch weiter verstärkt wird. Des Weiteren stellen die Schraubverbindungen des Gehäusedeckels einen zusätzlichen Herstellungsaufwand dar.

Es ist daher die Aufgabe der vorliegenden Erfindung, ein Schaltgetriebe für ein Kraftfahrzeug zu schaffen, dessen Getriebegehäuse eine Anordnungsmöglichkeit für die Zwischenwelle mit Zwischenrad bietet, welche sich durch eine möglichst hohe Festigkeit bei gleichzeitig niedrigem Herstellungsaufwand auszeichnet.

Diese Aufgabe wird ausgehend vom Oberbegriff des Anspruchs 1 in Verbindung mit dessen kennzeichnenden Merkmalen gelöst. Die darauf folgenden, abhängigen Ansprüche geben jeweils vorteilhafte Weiterbildungen der Erfindung wieder.

Die Erfindung umfasst die technische Lehre, dass die die Zwischenwelle aufnehmende Nebenkammer einen glockenförmigen Längsschnitt mit einem ovalen Querschnitt aufweist. Durch eine derartige Gestaltung der Nebenkammer werden keine Kerbspannungen gebildet, wobei durch den ovalen Querschnitt ein entsprechender Übergang zur Hauptkammer des Getriebegehäuses geschaffen werden kann, was zu einer Verbesserung der Festigkeit führt. Des Weiteren zeichnet sich eine derartige Gestaltung durch eine optimale Nutzung der Platzverhältnisse aus, was in einer besseren Materialausnutzung und somit auch einer Reduzierung des Herstellungsaufwands resultiert.

Die Bezeichnung oval meint hierbei eine Gestaltung des Querschnitts der Nebenkammer in Kreisform, aber auch jegliche andere, sich aus Einzelradien zusammensetzende Kontur.

Entsprechend einer vorteilhaften Ausführungsform der Erfindung geht die Nebenkammer entlang des glockenförmigen Längsschnitts, ausgehend von einem kreisförmigen Querschnitt kontinuierlich in einen elliptischen Querschnitt im Bereich der Hauptkammer über. Dies hat den Vorteil, dass aufgrund des zunächst kreisförmigen Querschnitts ein Verschlussdeckel der Nebenkammer mit einfachem Aufbau ausgestaltet werden kann, während im Bereich der Hauptkammer und somit im Bereich der Zwischenwelle und des Zwischenrades die Wände der Nebenkammer näher an das Zwischenrad herangeführt werden können. Somit lässt sich die Nebenkammer sehr kompakt gestalten, was insgesamt auch zu einem kompakten Aufbau des gesamten Getriebegehäuses führt. Der Ausdruck "elliptisch" meint hierbei eine Kontur, welche einem lang gezogenen Kreis ähnelt. Die Kontur weist dabei unterschiedliche Radien in Richtung der Achse der Zwischenwelle sowie orthogonal dazu auf.

Vorteilhafterweise ist die kürzere Erstreckung des elliptischen Querschnitts der Nebenkammer parallel zur Längsachse der Zwischenwelle ausgebildet und weist eine Größenordnung im Bereich der axialen Erstreckung des Zwischenrades auf. Dadurch werden die Wände der Nebenkammer sehr dicht an das Zwischenrad herangeführt, wodurch Radialkräfte näher im Bereich des Zwischenrades auf das Gehäuse übertragen werden. Dies resultiert in einer geringeren Durchbiegung der Zwischenwelle und damit auch in einer geringeren Durchbiegung von deren Aufnahmebohrungen im Getriebegehäuse.

In Weiterbildung der Erfindung weist ein Übergang der Nebenkammer in die Hauptkammer eine Größe im Bereich der radialen Erstreckung des Zwischenrades auf. Durch diese Maßnahme lässt sich der Durchbruch zur Hauptkammer möglichst klein gestalten, was zu einem weiteren Festigkeitsgewinn führt.

Gemäß einer weiteren, vorteilhaften Ausführungsform der Erfindung erfolgt ein Verschluss der Nebenkammer durch einen Deckel mit integrierter Dichtung. Diese hat den Vorteil, dass eine Montage des Deckels erleichtert wird, da eine Ausrichtung von Deckel und einer darunter angeordneten Dichtung entfallen kann.

In Weiterbildung der Erfindung erfolgt eine Sicherung des Deckels am Getriebegehäuse mittels eines Sprengringes. Dadurch lässt sich eine sichere Fixierung des Deckels am Getriebegehäuse bewerkstelligen, während gleichzeitig auf eine Verschraubung und somit deren Festigkeitsmindernde Wirkung verzichtet werden kann.

Entsprechend einer weiteren Ausgestaltung der Erfindung liegt die integrierte Dichtung in Form einer Elastomerdichtung vor. Vorteilhafterweise wird hierdurch eine sichere Abdichtung der Nebenkammer des Schaltgetriebes bewerkstelligt.

In Weiterbildung der Erfindung ist der Deckel als Umformteil gestaltet. Durch diese Maßnahme lässt sich der Deckel mit niedrigem Herstellungsaufwand fertigen.

Gemäß einer weiteren, vorteilhaften Ausführungsform der Erfindung ist das Schaltgetriebe nach Art eines Vorgelegewellengetriebes gestaltet. Dadurch ist das Schaltgetriebe insbesondere für den Längseinbau in einem Kraftfahrzeug geeignet, da eine koaxiale Anordnung von Antriebs- und Abtriebswelle möglich ist.

Weitere, die Erfindung verbessernde Maßnahmen werden nachstehend gemeinsam mit der Beschreibung eines bevorzugten Ausführungsbeispiels der Erfindung anhand der Figuren näher dargestellt.

Es zeigt:
- Fig. 1: einen Längsschnitt eines Getriebegehäuses des erfindungsgemäßen Schaltgetriebes, dargestellt im Bereich einer Nebenkammer;
- Fig. 2: eine Draufsicht auf die Nebenkammer des Getriebegehäuses aus Fig. 1; und
- Fig. 3: eine Schnittansicht der Nebenkammer des Getriebegehäuses, geschnitten entlang der Linie A-A in Fig. 1.

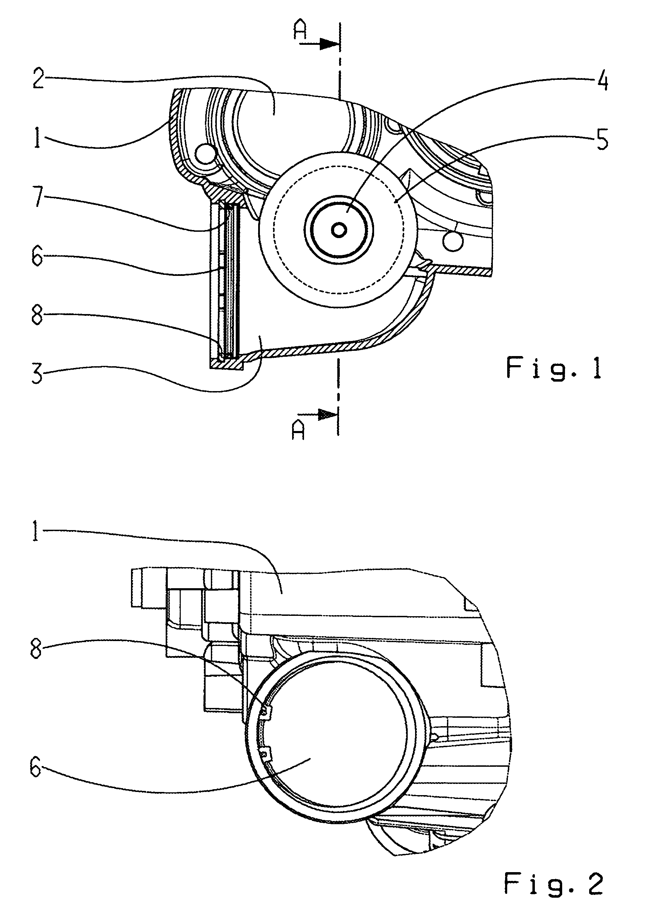

In Fig. 1 ist eine Längsschnittansicht eines Getriebegehäuses 1 des erfindungsgemäßen Schaltgetriebes zu sehen, welches eine Hauptkammer 2 und eine Nebenkammer 3 aufweist. Die Hauptkammer 2 und die Nebenkammer 3 sind über einen Übergang miteinander verbunden, in welchem eine Zwischenwelle 4 mit einem Zwischenrad 5 platziert ist. Der Übergang ist dabei derartig gestaltet, dass das Zwischenrad 5 mit seiner radialen Erstreckung darin Platz findet. Ein glockenförmiger Längsschnitt der Nebenkammer 3 wird zum einen durch den Übergang in die Hauptkammer 2 und zum anderen durch einen Deckel 6 begrenzt. Dieser Deckel 6 weist an seinem außerradialen Bereich eine integrierte Elastomerdichtung 7 auf und wird über einen in einer entsprechenden Ausnehmung der Nebenkammer 3 platzierten Sicherungsring 8 in Position gehalten.

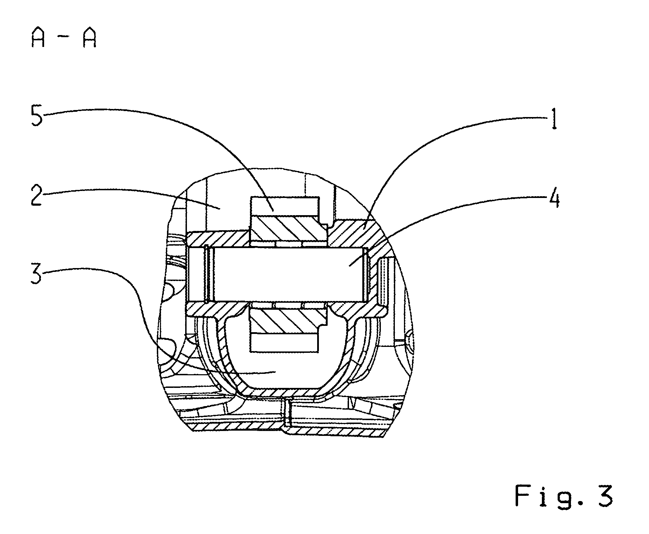

Wie aus Fig. 2 ersichtlich ist, weist die Nebenkammer 3 im Bereich des Deckels 6 einen kreisförmigen Querschnitt auf, wohingegen sie in Richtung des Übergangs zur Hauptkammer 2 kontinuierlich in einen elliptischen Querschnitt übergeht, welcher in Fig. 3 zu sehen ist. Wie ferner aus Fig. 3 zu erkennen ist, liegt dabei eine kürzere Erstreckung s des elliptischen Querschnitts der Nebenkammer 3 von der Größenordnung her im Bereich einer axiale Erstreckung des Zwischenrades 5.

Durch eine derartige Gestaltung der Nebenkammer 3 ist es möglich, eine Aufnahme im Getriebegehäuse für die Zwischenwelle 4 mit Zwischenrad 5 zu gestalten, die eine hohe Festigkeit aufweist und trotzdem vom Herstellungsaufwand gering ausfällt.

### Bezugszeichen

- 1: Getriebegehäuse
- 2: Hauptkammer
- 3: Nebenkammer
- 4: Zwischenwelle
- 5: Zwischenrad
- 6: Deckel
- 7: Elastomerdichtung
- 8: Sprengring

- s: kürzere Erstreckung elliptischer Querschnitt

## Patentansprüche

1. Schaltgetriebe eines Kraftfahrzeuges mit einer Antriebs- und einer Abtriebswelle, die in einer Hauptkammer (2) eines Getriebegehäuses (1) gelagert sind und über welche durch miteinander kämmende Zahnradpaare ein Leistungsfluss durch gezielte Betätigung von Kupplungen mittels einer Schalteinrichtung führbar ist, wobei parallel zur Antriebs- und zur Abtriebswelle eine Zwischenwelle (4) mit einem Zwischenrad (5) in einer mit der Hauptkammer (2) in Verbindung stehenden Nebenkammer (3) des Getriebegehäuses (1) angeordnet ist, um bei einer entsprechenden Betätigung durch die Schalteinrichtung einen Leistungsfluss von der Antriebswelle über das Zwischenrad (5) der Zwischenwelle (4) auf die Abtriebswelle zur Drehrichtungsumkehr der Abtriebswelle darzustellen,
**dadurch gekennzeichnet, dass** die die Zwischenwelle (4) aufnehmende Nebenkammer (3) einen glockenförmigen Längsschnitt mit einem ovalen Querschnitt aufweist.

2. Schaltgetriebe nach Anspruch 1,
**dadurch gekennzeichnet, dass** die Nebenkammer (3) entlang des glockenförmigen Längsschnitts, ausgehend von einem kreisförmigen Querschnitt kontinuierlich in einen elliptischen Querschnitt im Bereich der Hauptkammer (2) übergeht.

3. Schaltgetriebe nach Anspruch 2,
**dadurch gekennzeichnet, dass** die kürzere Erstreckung (s) des elliptischen Querschnitts der Nebenkammer (3) parallel zur Längsachse der Zwischenwelle (4) ausgebildet ist und eine Größenordnung im Bereich der axialen Erstreckung des Zwischenrades (5) aufweist.

4. Schaltgetriebe nach einem der Ansprüche 1 bis 3,
**dadurch gekennzeichnet, dass** ein Übergang der Nebenkammer (3) in die Hauptkammer (2) eine Größe im Bereich der radialen Erstreckung des Zwischenrades (5) aufweist.

5. Schaltgetriebe nach einem der vorhergehenden Ansprüche,
**dadurch gekennzeichnet, dass** ein Verschluss der Nebenkammer (3) durch einen Deckel (6) mit integrierter Dichtung erfolgt.

6. Schaltgetriebe nach Anspruch 5,
**dadurch gekennzeichnet, dass** eine Sicherung des Deckels (6) am Getriebegehäuse (1) mittels eines Sprengringes (8) erfolgt.

7. Schaltgetriebe nach Anspruch 5,
**dadurch gekennzeichnet, dass** die integrierte Dichtung in Form einer Elastomerdichtung (7) vorliegt.

8. Schaltgetriebe nach Anspruch 5,
**dadurch gekennzeichnet, dass** der Deckel (6) als Umformteil gestaltet ist.

9. Schaltgetriebe nach einem der vorhergehenden Ansprüche,
**dadurch gekennzeichnet, dass** dieses nach Art eines Vorgelegewellengetriebes gestaltet ist.

10. Kraftfahrzeug, umfassend ein Schaltgetriebe nach einem der Ansprüche 1 bis 9.

## Claims

1. Change-speed gearbox of a motor vehicle having a drive shaft and an output shaft which are mounted in a main chamber (2) of a gearbox casing (1) and via which a power flow can be guided by gearwheel pairs which mesh with one another by targeted actuation of clutches by means of a shifting device, an intermediate shaft (4) with an intermediate gear (5) being arranged parallel to the drive shaft and to the output shaft in an auxiliary chamber (3) of the gearbox casing (1), which auxiliary chamber (3) is connected to the main chamber (2), in order, in the case of a corresponding actuation by the shifting device, to produce a power flow from the drive shaft via the intermediate gear (5) of the intermediate shaft (4) to the output shaft for reversing the rotational direction of the output shaft, **characterized in that** the auxiliary chamber (3) which accommodates the intermediate shaft (4) has a bell-shaped longitudinal section with an oval cross section.

2. Change-speed gearbox according to Claim 1, **characterized in that** the auxiliary chamber (3) merges continuously into an elliptical cross section in the region of the main chamber (2) along the bell-shaped longitudinal section, starting from a circular cross section.

3. Change-speed gearbox according to Claim 2, **characterized in that** the shorter extent (s) of the elliptical cross section of the auxiliary chamber (3) is configured parallel to the longitudinal axis of the intermediate shaft (4) and has an order of magnitude in the region of the axial extent of the intermediate gear (5).

4. Change-speed gearbox according to one of Claims 1 to 3, **characterized in that** a transition of the auxiliary chamber (3) into the main chamber (2) has a size in the region of the radial extent of the intermediate gear (5).

5. Change-speed gearbox according to one of the preceding claims, **characterized in that** the auxiliary chamber (3) is closed by a cover (6) with an integrated seal.

6. Change-speed gearbox according to Claim 5, **characterized in that** the cover (6) is secured on the gearbox casing (1) by means of a circlip (8).

7. Change-speed gearbox according to Claim 5, **characterized in that** the integrated seal is present in the form of an elastomer seal (7).

8. Change-speed gearbox according to Claim 5, **characterized in that** the cover (6) is designed as a formed part.

9. Change-speed gearbox according to one of the preceding claims, **characterized in that** it is designed in the manner of a countershaft transmission.

10. Motor vehicle, comprising a change-speed gearbox according to one of Claims 1 to 9.

## Revendications

1. Boîte de vitesses d'un véhicule automobile comprenant un arbre d'entraînement et un arbre de sortie, qui sont montés dans une chambre principale (2) d'un carter de transmission (1) et par le biais desquels un flux de puissance peut être guidé par actionnement spécifique d'embrayages au moyen d'un dispositif de commutation par au moins des paires de roues dentées s'engrenant mutuellement, un arbre intermédiaire (4) avec une roue intermédiaire (5) étant disposé parallèlement à l'arbre d'entraînement et à l'arbre de sortie dans une chambre auxiliaire (3) du carter de transmission (1) en liaison avec la chambre principale (2), afin de créer un flux de puissance depuis l'arbre d'entraînement par le biais de la roue intermédiaire (5) de l'arbre intermédiaire (4) jusqu'à l'arbre de sortie, lors d'un actionnement correspondant par le dispositif de commutation, en vue d'inverser le sens de rotation de l'arbre de sortie,
**caractérisée en ce que** la chambre auxiliaire (3) recevant l'arbre intermédiaire (4) présente une coupe longitudinale en forme de cloche avec une section transversale ovale.

2. Boîte de vitesses selon la revendication 1, **caractérisée en ce que** la chambre auxiliaire (3), le long de la coupe longitudinale en forme de cloche, partant d'une section transversale circulaire, se prolonge de manière continue en une section transversale elliptique dans la région de la chambre principale (2).

3. Boîte de vitesses selon la revendication 2,
**caractérisée en ce que** l'étendue plus courte (s) de la section transversale elliptique de la chambre auxiliaire (3) est réalisée parallèlement à l'axe longitudinal de l'arbre intermédiaire (4) et présente un ordre de grandeur dans la plage de l'étendue axiale de la roue intermédiaire (5).

4. Boîte de vitesses selon l'une quelconque des revendications 1 à 3,
**caractérisée en ce qu'**une transition de la chambre auxiliaire (3) à la chambre principale (2) présente une grandeur dans la plage de l'étendue radiale de la roue intermédiaire (5).

5. Boîte de vitesses selon l'une quelconque des revendications précédentes,
**caractérisée en ce qu'**une fermeture de la chambre auxiliaire (3) est réalisée par un couvercle (6) avec un joint d'étanchéité intégré.

6. Boîte de vitesses selon la revendication 5,
**caractérisée en ce qu'**une fixation du couvercle (6) sur le carter de transmission (1) est réalisée avec un jonc (8).

7. Boîte de vitesses selon la revendication 5,
**caractérisée en ce que** le joint d'étanchéité intégré se présente sous la forme d'un joint d'étanchéité élastomère (7).

8. Boîte de vitesses selon la revendication 5, **caractérisée en ce que** le couvercle (6) est configuré sous forme de pièce façonnée.

9. Boîte de vitesses selon l'une quelconque des revendications précédentes,
**caractérisée en ce que** celle-ci est configurée à la manière d'une boîte de vitesses à arbre secondaire.

10. Véhicule automobile comprenant une boîte de vitesses selon l'une quelconque des revendications 1 à 9.
